# EUROPEAN PATENT APPLICATION

(11) **EP 1 341 114 A2**
(43) Date of publication of application: **03.09.2003**
(21) Application number: 03075489.9
(22) Date of filing: 19.02.2003
(51) Int. Cl.: G06F 17/60

(54) **Management method based on stream management in supply chain product management**

(30) Priority: 20.02.2002 JP 2002043573
(71) Applicant: e-Manufacturing Co., Ltd, Tokyo (JP)
(72) Inventor: Uno, Takeaki, Kawasaki-shi, Kanagawa (JP); Okumura, Naomasa, Tokyo (JP)
(74) Representative: Prins, Adrianus Willem

(57) **Abstract**

A management method of this invention is a method of managing a supply chain by a computer system. This management method includes, at the input phase in the computer system, a step of treating various objects to be managed as management objects and setting lots for these, a step of assigning ID management data to each of the plurality of lots, and a step of preparing part charts or process charts. The method includes, at the output phase, a step of creating correspondence data and making allocations between two lots with linkage among the plurality of lots, and a step of changing the relationship of the allocations based on a plurality of correspondence data relating to two lots in the plurality of lots when a change occurs in a received order etc. The above management method can manage changes in state of received orders, processes, etc. to be handled dynamically and quickly when handling a large amount of data in management at different stages in supply chain product management to enable dynamic stream management, and therefore is a practical management method.

## Description

### BACKGROUND OF THE INVENTION

### 1. Field of the Invention

The present invention relates to a practical management method able to dynamically manage the changes of received orders, processes by high speed calculation, when handling large amounts of data in stream management for a series of received orders, placement of orders for raw materials, production, subcontracting, delivery, etc. in supply chain product management.

### 2. Description of the Related Art

A "supply chain" conceptually means a chain formed as a stream in the product supply process from the raw materials supply by a raw material supply company to the production of products or the delivery of them to customers by the factory. The supply chain includes a plurality of sectors from an upper side to a lower side in the stream such as supplies of materials, parts, and other raw materials, production of products, wholesaling, retailing, and sale of the product. "Supply chain management" is a management technique for improving the whole efficiency of the above supply chain system. It links all elements of the supply chain by a network, records and manages all information on production, inventories, orders for raw materials, subcontracting (purchasing), sale and physical distribution on a computer system (scheduler etc.), and exchanges all of the information in real time.

The conventional supply chain management has made a point of inventory control. The "inventory control" is a management technique for stopping a stream of time on the supply chain from the supply of raw materials to shipment of the product at a specific point of time to confirm "what is where in how many quantities". The technique of inventory control has had property of the static management technique since it stopped time to confirm the state of the inventory at a specified time. Further, the static management technique of inventory control was a management technique for maintaining the amount of inventory at a suitable level (including reduction of the amount of inventory as much as possible).

According to the inventory control by the conventional supply chain management, the specific processing was performed to hold a requisite amount of product as inventory for allocation for future acceptance of orders or shipments corresponding to these orders ("semi-completed product inventory" in case of parts in the intermediate stage), and to deduct the amount of shipments from the amount of inventory when shipping the product out from the inventory in accordance with the received orders. That is, when actual changes (shipment for the received orders or deduction of amount of shipment from amount of inventory) occurred in the management based on the computer system, the amount of inventory would be managed by batch processing at a predetermined time in the day, and confirmed after the batch processing. Further, in production control, production would be performed while viewing the amount of inventory in the inventory control. Conversely, without performing the above batch processing, the amount of inventory could not be accurately grasped, the production control could not be performed, and whether or not shipment was possible for newly received orders could not be immediately determined. As explained above, according to the conventional supply chain management, since it was the inherently static inventory control, it was not possible to manage the changes and modifications in the received orders, processes or the like dynamically and quickly.

Therefore, the present inventor previously proposed supply chain management based on the new management technique of stream management having a dynamic nature with respect to the changes in state of the received orders or processes rather than the inventory control by the batch processing for the conventional general supply chain management based on the inventory control (Japanese Patent Application No. 10-284052 "Supply Chain Product Management Method" (JP-A-2000-113080)). According to the supply chain management, in the chain from the drafting plan for producing product to the delivering the product to customers in management by a computer system, lots are arbitrarily set for the planned product (or intermediate parts), a lot ID specifying each lot of the product is assigned, "correspondence relationship (linkage)" is created between each of a plurality of lots and each of a plurality of received orders using the lot IDs, and the supply is managed by the correspondence relationship. In the above correspondence relationship, relations can be created and managed by linking any n number of product lots and any m number of received orders. The correspondence relationship is created by the processes of the different phases from the upper side to the lower side in the stream of the supply chain. Further, the correspondence relationship can be immediately tracked based on the linkages and changes quickly made to obtain the optimal state when the state of received orders is changed.

The above-mentioned technical contents will be explained in more detail. The above supply chain management is based on the following idea. This management aims at the stream of related management objects at different phases in the supply chain, and introduces the concept of "granularity" that means the number (quantity) in each of the management objects as an aggregate and is defined as the size of each management object in management. The stream includes routines in the production process, changes in the numbers, changes in state of the management objects, and time to complete the process. The phases include the planning, the orders for raw materials, the subcontracting (purchasing), the acceptance of orders, initial production or intermediate production, maintenance of the semi-completed product inventory, final production, maintenance of completed product inventory, shipment, delivery and so on. The above management is based on the idea of determining the "granularity" for each management object in accordance with the phases, and creating the correspondence relationships between production processes from the upstream to the downstream using the management objects defined by the granularity as a unit. Each of the above "management object" is the "lot" set at the time of drafting the production plan. The lot is a unit in the stream control. In each lot, the above granularity is defined as a size of a certain number or quantity. Further, the above "correspondence relationship" is the correspondence relationship determined on part charts and process charts. This correspondence relationship is also called "pegging". These correspondence relationships are stored in the storage device of the computer system and managed in the computer system. In the computer system, the above correspondence relationships are changed quickly and appropriately in accordance with changes in the state of the received orders or changes in the state of processes. In accordance with the dynamic management information relating to the "stream" based on the above correspondence relationships indicated on the display of the computer system, the user can determine whether or not to accept newly received orders or to ship out product, etc. in a short time. Depending on the above content, dynamic management based on the stream management in the above supply chain management previously proposed by the inventor is made possible.

In the above-mentioned supply chain management for the dynamic stream management previously proposed by the present inventor, when the size of the supply chain system becomes large and the amount of data handled by the supply chain becomes huge, the load of calculation in the computer system becomes extremely heavy. Therefore, if considering the practical aspects, it is desirable to be able to quickly handle and manage the changes in the state of the received orders and the processes by a high speed calculation method when handling a large amount of data in the stream management in the supply chain product control.

### SUMMARY OF THE INVENTION

An object of the present invention is to provide a useful and practical method of management able to dynamically and quickly manage any changes in the received orders, the processes, etc. when handling a large amount of data at the different phases in the supply chain product management enabling the dynamic stream management.

The management method in the stream management for the supply chain product management according to the present invention is configured as follows for achieving the above object.

The management method of the present invention is a method for managing an entire process including a phase of drafting a production plan for a product based on a plurality of actual or anticipated received orders, a phase of producing a product through a plurality of lower production processes based on a predetermined routine (production processes of intermediate parts or completed products), and a step of delivering the produced product to a plurality of customers corresponding to a plurality of received orders. This management method includes, at the phase of drafting a production plan for a product, a step of treating each of the plurality of received orders, each of a plurality of production objects (parts or completed products) in the plurality of lower production processes, each of a plurality of procedures with the outside relating to the lower production processes (placement of orders for raw materials, subcontracting), and each of the plurality of deliveries as a management object, and setting a lot for each of these management objects, a step of assigning ID management data including a lot ID number, product name, quantity, and delivery date to each of the plurality of lots, and a step of making allocation for two lots with linkage among the plurality of lots by making correspondence data including a quantity to be supplied based on the lot ID numbers and linkage relating to the two lots using the plurality of ID management data relating to a plurality of lots. Further, it includes, corresponding to the phase of producing the product, a step of changing the relationship of the allocations based on the plurality of correspondence data relating to two lots in the plurality of lots corresponding to a change occurring in a received order.

According to the above configuration, it is possible to immediately optimally change the relationship of the allocations in accordance with changes in an actual received order etc. and possible to immediately give a response regarding a delivery date in real time. Further, it is possible to treat all management objects of a production plan relating to the production process or delivery process at the same level, possible to quickly perform allocation processing even for procedures such as placement of orders for raw materials, subcontracting, etc. with the outside relating to intermediate parts or production processes, and possible to give an immediate response regarding a delivery date.

In the above management method, preferably lots relating to any m number of received orders and lots relating to any n number of management objects other than received orders are allocated in an m:n correspondence.

In the above management method, preferably lots relating to any m number of upstream lower production processes and lots relating to any n number of downstream side lower production processes are allocated in an m:n correspondence.

Another management method of the present invention is a method of managing by a computer system a process comprised of a phase of drafting a production plan for a product based on a plurality of received orders, a phase of producing a product through a plurality of lower production processes based on a predetermined routine, and a phase of a plurality of procedures with the outside relating to the lower production processes. This management method includes, at the phase of inputting to the computer system, a step of treating each of the plurality of received orders, each of the plurality of production objects (parts, completed products) in the plurality of lower production processes, and each of the plurality of procedures with the outside relating to the lower production processes as a management object, setting a lot for each of these management objects, a step of assigning ID management data including a lot ID number, product name, quantity, and delivery date to each of the plurality of lots, and a step of preparing part charts and process charts expressing the relationship of the necessary quantities between parts included in the plurality of lower production processes. Further, the method includes, at the phase of preparing, storing, and outputting data in the computer system, a step of making allocation for two lots with linkage among the plurality of lots by making correspondence data including a quantity to be supplied based on the lot ID numbers and linkage relating to the two lots using the plurality of ID management data, the part charts, and the process charts relating to the plurality of lots to, and a step of changing the relationship of the allocation based on the plurality of correspondence data relating to two lots in the plurality of lots corresponding to at least a change occurring in a received order.

According to the above configuration, it is possible to draft a dynamic production plan based on stream management and possible to quickly perform allocation processing in accordance with changes in actual received orders rather than static management such as inventory control.

In the above other management method, the step of changing the relationship of allocations comprises classifying the ID management data of a plurality of lots relating to a plurality of production objects and the ID management data of a plurality of lots relating to a plurality of procedures into different products to prepare a group of data for the plurality of lots, taking out ID management data of a plurality of lots relating to a plurality of received orders in the order of earlier delivery, and, for the taken out ID management data, (1) searching from the group of data for the product required by that ID management data having the latest complete time and allocating the necessary quantities for the same, (2) executing the step of the above (1) recursively until reaching the upstream most management object even with respect to the allocated ID management data, and (3) repeating the steps of the above (1) and (2) until the ID management data of all of the received orders has been taken out.

According to the above configuration, in preparing the correspondence data, since the ID management data is classified into different products to prepare a group of data and the ID management data for received order lots is taken out in the order of the earlier delivery dates for allocation processing, that is, preparation of correspondence data, quite fewer objects are needed to be accessed in the search processing for allocation. Thus, the computation for the allocations can be performed quickly, and responses about delivery dates can be given in a shorter time.

In the above other management method, the step of changing the relationship of allocations comprises classifying the ID management data of a plurality of lots relating to a plurality of production objects and the ID management data of a plurality of lots relating to a plurality of procedures into different products to prepare a group of data for the plurality of lots, taking out ID management data of a plurality of lots relating to a plurality of received orders in the order of the higher priority, and, for the taken out ID management data, (1) searching from the group of data for the product required by that ID management data having the latest finishing date and allocating the necessary quantities, (2) executing the step of the above (1) recursively until reaching the upstream most management object even with respect to the allocated ID management data, and (3) repeating the steps of the above (1) and (2) until the ID management data of all of the received orders has been taken out.

According to the above configuration, in preparing the correspondence data, since the ID management data is classified into different products to prepare a group of data and the ID management data for received order lots is taken out in the order of higher priority for allocation processing, that is, preparation of correspondence data, there are fewer objects for the search processing for allocations, the computations for the allocations can be performed quickly, and responses about delivery dates can be given in a shorter time.

Further, in the above group of data for the different products, the above management methods are characterized by arranging the ID management data of the plurality of lots relating to a plurality of production objects and the ID management data of a plurality of lots relating to a plurality of procedures in the order of delivery. According to this configuration, since the data is arranged in the order of delivery for the different products, the speed of calculation becomes further faster, management becomes easier, and the system performance can be improved.

### BRIEF DESCRIPTION OF THE DRAWINGS

These and other objects and features of the present invention will become clearer from the following description of the preferred embodiments given with reference to the attached drawings, wherein:
FIG. 1 is an explanatory view of a supply chain management model based on a "stream" to which the management system based on the stream management according to the present invention is applied;
FIG. 2 is a view showing conceptually management objects relating to a plurality of production processes for parts in a production process, other management objects relating to them, and correspondence relationships;
FIG. 3 is a view of the data structure of ID management data (management items);
FIG. 4 is a block diagram of a management computer system;
FIG. 5 is a view of the data structure of the correspondence relationship data;
FIG. 6 is a relationship view showing an example of allocation relations among received orders, production process of a completed product β1, a production process of a part α1, purchasing, and subcontracting, etc.;
FIG. 7 is a flow chart of an allocation program for allocation processing in the order of earlier delivery dates of the received order lots; and

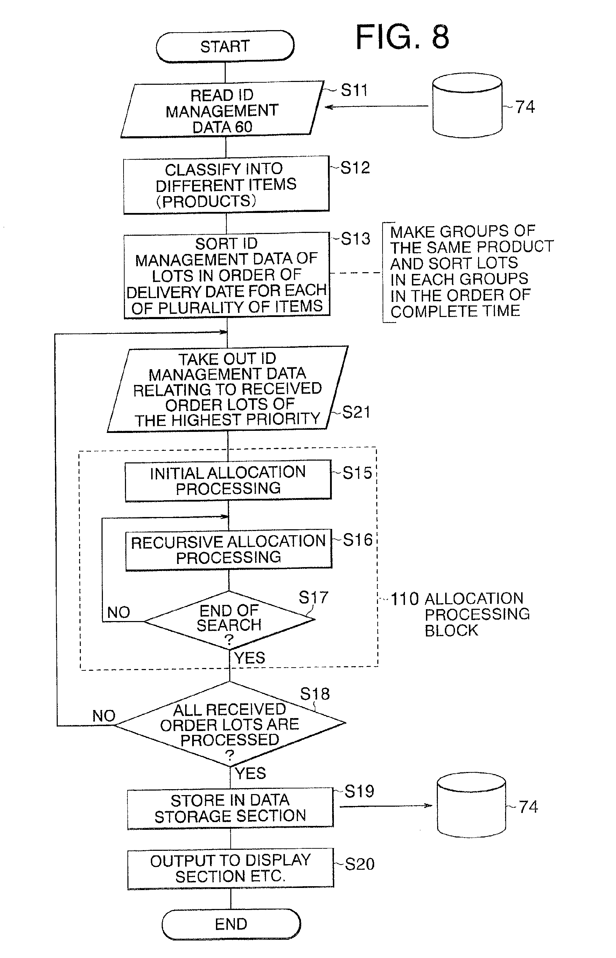

FIG. 8 is a flow chart of an allocation program for allocation processing in the order of priority of the received order lots.

### DESCRIPTION OF THE PREFERRED EMBODIMENTS

Preferred embodiments of the present invention will be described in detail below while referring to the attached figures. The configuration explained in the embodiments, the sizes, and the relative arrangements are only shown in general to an extent enabling the present invention to be understood and worked. Further, the numerical figures and the configurations of the components are only examples for illustration. Therefore, the present invention is not limited to the following explained embodiments and can be changed in various ways so long as not departing from the scope of the technical idea shown in the claims.

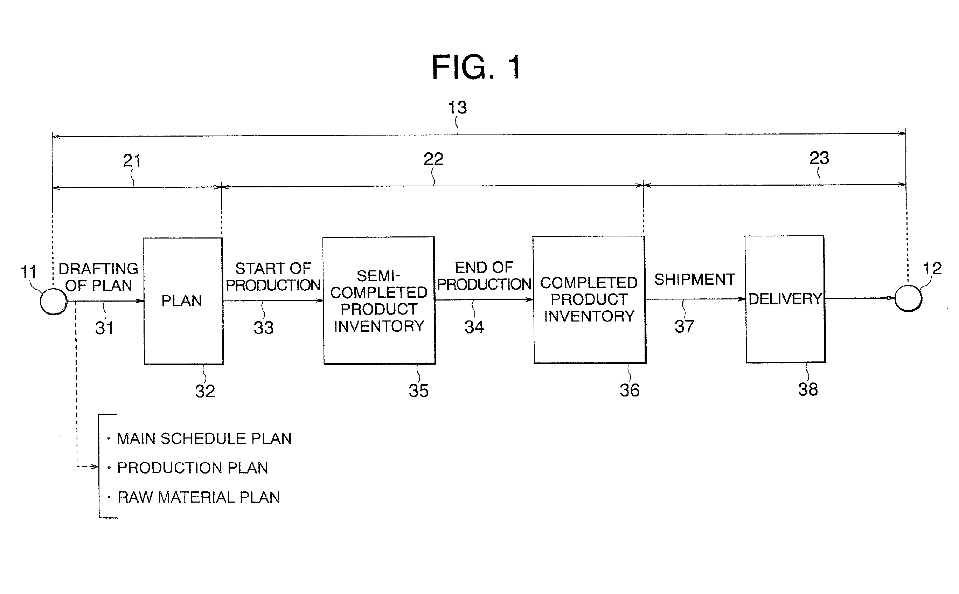

FIG. 1 shows a supply chain management model based on a "stream" according to the present invention. The management model is a model based on the stream management. The entire process 13 from a start point 11 to an end point 12 shows the supply chain. The start point 11 means the start time of the production plan, while the end point 12 means the delivery time of the product to customers. The entire process from the start point 11 to the end point 12, shown schematically in accordance with the elapse of time, is comprised of a plurality of partial phases or stages such as the planning process 21, the production process 22, and the delivery process 23. In FIG. 1, the planning process 21 is expressed by plan drafting work 31 and drafted plan 32. In actuality, the planning process 21, seen more closely, is comprised of a main schedule plan, a production plan, a raw material plan, etc. The production process 21 is expressed schematically by production work 33 and 34 and maintenance of an intermediate semi-completed product inventory 35 and final completed product inventory 36. The production process 22 includes a plurality of part production processes for producing a plurality of intermediate parts, a final production process for producing a completed product, placement of orders for and procurement of raw materials (purchasing of the raw materials), subcontracting, management thereof, etc. The part production processes and the final production process form the lower-rank production processes of the production process 22. The delivery process 23 is expressed by delivery preparation work 37, the act of delivery 38, and storage in temporary warehouses etc.

As explained above, the later explained computer production control is applied to the entire process 13 expressed as a stream along with the elapse of time. A supply chain management model (a stream management model) based on the "stream", that is, a management system based on the stream management, is realized. The management system is configured by a computer system used for the management. The computer management from the start point 11 to the end point 12 is called "vertical management".

To realize the supply chain management system based on the above "stream", the computer system treats all of the procedures in the entire process 13 from the planning process 21 to the delivery process 23 such as the acceptance of orders, the production of parts in the part production processes, procedures with the outside such as placement of orders for raw materials, subcontracting, purchasing, etc. by the concept of "management objects" . In the computer system, therefore, the concept of a "lot" for each of the management objects is introduced. These lots are determined at the time of drafting the plan in the initial planning process 21. Each of the lots is defined as a related management object in each of a plurality of phases forming the entire process 13 of the supply chain.

Specifically, the lot is an received order, a finally completed product, each of a plurality of parts forming the completed product, subcontract or purchase based on various relations with the outside related to the production process, or the like. In the management computer system, each of the lots is treated as an item in accordance with its content. Further, a concept of the "granularity" (the number in an aggregate) is introduced as a size in the management of the lots. The "granularity" is set for each lot in accordance with each phase. Using the lot defined by the granularity as a unit, in the processes from the start point 11 at the upper side to the end point 12 at lower side, a "correspondence relationship" (primary relationship) between a lot relating to a part and each of the received orders, the raw materials, and the resources (machinery), etc., and a "correspondence relationship" (secondary relationship) between a lot relating to a certain part and a lot relating to another part are made. The above "lots" are units of the stream management in the management computer system according to the present embodiment. Further, concerning the two "correspondence relationships", the former one is the correspondence between process charts and the later one is the correspondence between part charts (the correspondence between the parts). The above two correspondence relationships are managed by the above management computer system. This management is called "lateral management (association)".

The technique relating to the above "stream" management in the above supply chain management system, as mentioned above, is, at the phase of the production plan 21, to define a large number of lots at different phases of the anticipatory process corresponding to the acceptance of orders in the production process 22, set the granularity for each of the large number of lots, and create the "correspondence relationship (pegging)" between a plurality of production process lots and the received orders etc. and between a plurality of production process lots.

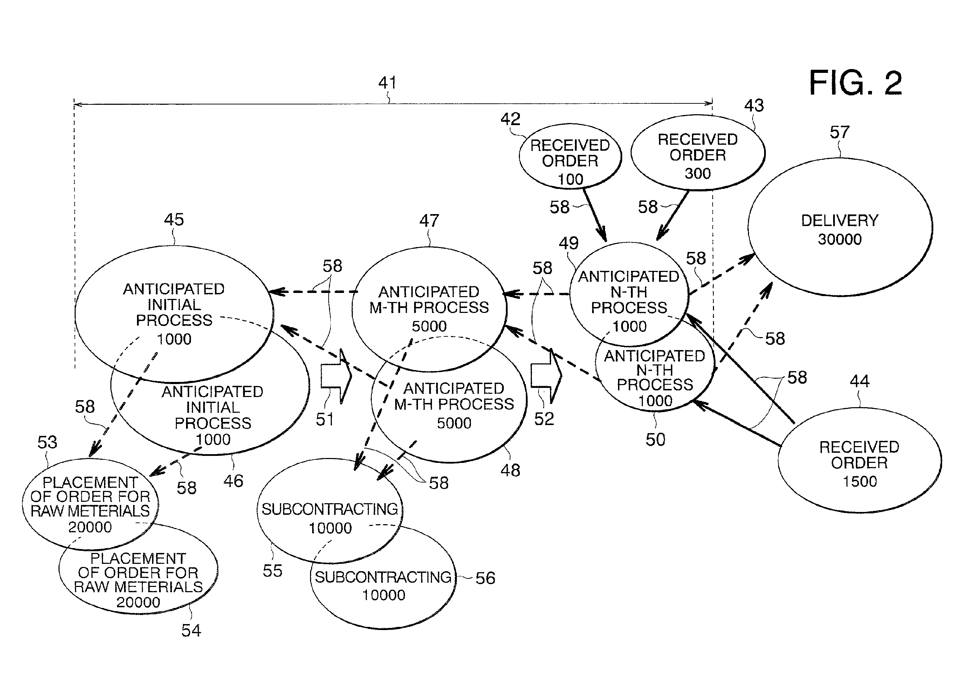

FIG. 2 is a view for schematically explaining the management objects relating to the plurality of part production processes etc. from the upper side to the lower side in the production process 22 and the management objects relating to the plurality of part production processes etc. FIG. 2 clarifies the management (pegging management) based on the above correspondence relationships. A plurality of oval graphics correspond to the management objects and express the above-mentioned concept of "lots" as images.

Section 41 in FIG. 2 corresponds to the above production process 22. In the production process 22, as explained earlier, there are a plurality of part production processes for producing a plurality of parts, procedures with the outside such as placement of orders for raw materials and subcontracting, delivery of the finally completed products. These elements are set corresponding to anticipated or actual received orders. In FIG. 2, for example, three received order lots 42, 43, and 44 are shown. In section 41 of the production process, for example, two production routes related to two types of products are drawn. As one example, in the direction from the upstream side (left side in Fig. 2) toward the downstream side (right side in Fig. 2) as the part production processes and final production process in each production route, lots relating to three lower production processes of the anticipated initial process lots 45, 46, anticipated m-th process lots 47, 48, and anticipated n-th process lots 49, 50 are shown.
In the part production processes etc., in FIG. 2, as shown by the arrows 51, 52, a stream of production is formed from the left to the right. In fact, in the production process, there is a large number of part production processes etc. In FIG. 2, to facilitate understanding of this embodiment, three anticipated initial process lots, an anticipated m-th process lot ("m" is any natural number), and an anticipated n-th process lot ("n" is any natural number) are shown for convenience. Note that these process lots are lots related to the parts or completed parts (production objects) actually produced by the process. As the relationship with the outside, for example, the raw material ordering lots 53, 54 and subcontracting lots 55, 56 are shown. The raw material ordering lots 53, 54 are linked with the anticipated process lots 45, 46, while the subcontracting lots 55, 56 are linked with the anticipated m-th process lots 47, 48. Further, the delivery lot 57 is shown as one example.

As explained above, among the large number of lots, as one example, as shown by the large number of arrows, a "linkage" is formed between two specific lots. This linkage is necessarily generated at the phase of the production process 22 in the supply chain. The "linkage" between two lots corresponds to the above-mentioned "correspondence relationship". In FIG. 2, large numbers of correspondence relationships are shown. Roughly divided, these may be divided into correspondence relationships between the received order lots 42 to 44 and process lots 49, 50, correspondence relationships between the process lots, and correspondence relationships between the process lots and raw material ordering lots 53, 54 or subcontracting lots 55, 56. The correspondence relationship between the lots is not 1:1. In general, an m:n correspondence relationship is formed between the received order lots and the process lots relating to production or between one process lot and another process lot.

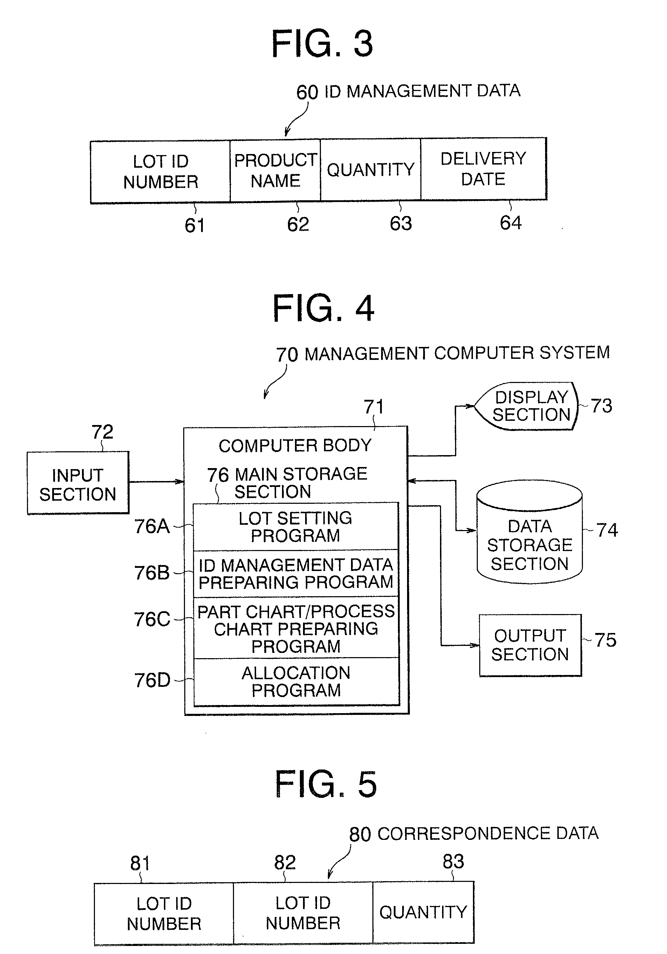

Next, the above "lot" will be explained in detail. Each of the above-mentioned large number of lots is assigned ID management data in the management computer system. FIG. 3 shows the data structure of the ID management data. The ID management data 60 is preferably comprised of data relating to the four management items, that is, the lot ID number 61, product name 62, quantity 63, and delivery date 64. All of the lot ID numbers 61 are determined so that they are respectively corresponded to all of the lots by one to one correspondence, when setting the lots in the management computer system at the time of making the production plan in the phase of the planning process 21. The lot ID number 61 are introduced at the phase of the planning process 21 and are not changed until the product is handed over or until the later after-sales service. In the stream management, the ID management number 60 including the lot ID number 61 is important in management. By using the ID management data 60 assigned to all lots, all of the lots or the elements of the stream management are managed and thereby the production process 22 or the like is managed. The quantity 63 determines the number (granularity) of the production objects, which is the management size of a lot. The management size of each lot can be freely set in accordance with the production conditions and circumstances. In FIG. 2, the numerals described in the oval graphics showing the lots show the quantities of the lots, that is, the management sizes (granularity) of the lots. The delivery date 64 is the delivery date for the received order corresponding to the lot, the production processes of the parts or the completed product, the placement of orders for raw materials, the subcontracting, the purchasing, etc., or the date when the parts or completed product are completed.

FIG. 4 shows the block configuration of the management computer system. The management computer system 70 is comprised of a computer body 71, an input section 72, a display section 73, a data storage section (database or the like) 74, and another output section 75. As explained above, when determining all of the lots required in the production process 22 and delivery process 23 at the phase of the planning process 21 and further assigning ID management data to each lot, information relating to the ID management data 60 relating to each lot is input through the input section 72 of the management computer system 70. All of the input ID management data 60 are stored in a record format in the data storage section 74 of the management computer system 70.

When inputting data to the above management computer system 70, charts of "what part is required in what number when producing one product" are simultaneously prepared and input. These charts include part charts and process charts. The data relating to the part charts and process charts are stored in the data storage section 74.

In the large number of ID management data created as a result of the data being assigned to each of the large number of lots in the management computer system 70, as explained in FIG. 2, the following correspondence data is created between two ID management data corresponding to two lots formed with "linkage" (arrow 58) based on the correspondence relationship between the two lots. Allocation is performed by the creation of this correspondence data.

To execute the above processing, the main storage section 76 in the computer body 71 stores a lot setting program 76A, an ID management data preparing program 76B, a part chart/process chart preparing program 76C, and an allocation program 76D for allocation processing by creation of correspondence data. Note that the computer body 71 is provided with a scheduler, delivery response program, etc. required for management of the production process.

FIG. 5 shows the data structure of correspondence data. The correspondence data 80 include data relating to items of the first lot ID number 81, the second lot ID number 82, and quantity 83. The correspondence data 80 means "to allocate the quantity expressed by the data of the quantity 83 to the second lot corresponding to the second lot ID number 82 from the first lot corresponding to the first lot ID number 81". At this time, two lots formed with "linkage" are assigned as the first lot and second lot. This way prepares how much of a quantity of what ID management data in the plurality of ID management data relating to a received order lot to allocate to what ID management data in the plurality of ID management data 60 relating to the production process lot. Further, the way prepares how much of a quantity of what ID management data in the plurality of ID management data 60 relating to a production process lot to allocate to ID management data relating to which other production process lot or which placement of an order for raw materials, subcontracting, or other lots. The large number of correspondence data 80 prepared in the above way is automatically prepared by the allocation program 76D relating to the present embodiment, stored in a record format in the data storage section 74, and output to the display section 73 etc. in accordance with need.

Note that in the automatic preparation of correspondence data 80 based on the above allocation program, there are restrictions based on the conditions of the production process etc. Giving examples of the restrictions, typically it is required that there be no excess or shortage in the process as a whole relating to the quantities allocated between the first lot and second lot, the temporal relationship before and after the delivery period be correct, and that low priority items not be allocated while high priority items are not allocated. These restrictive conditions are built into the allocation program.

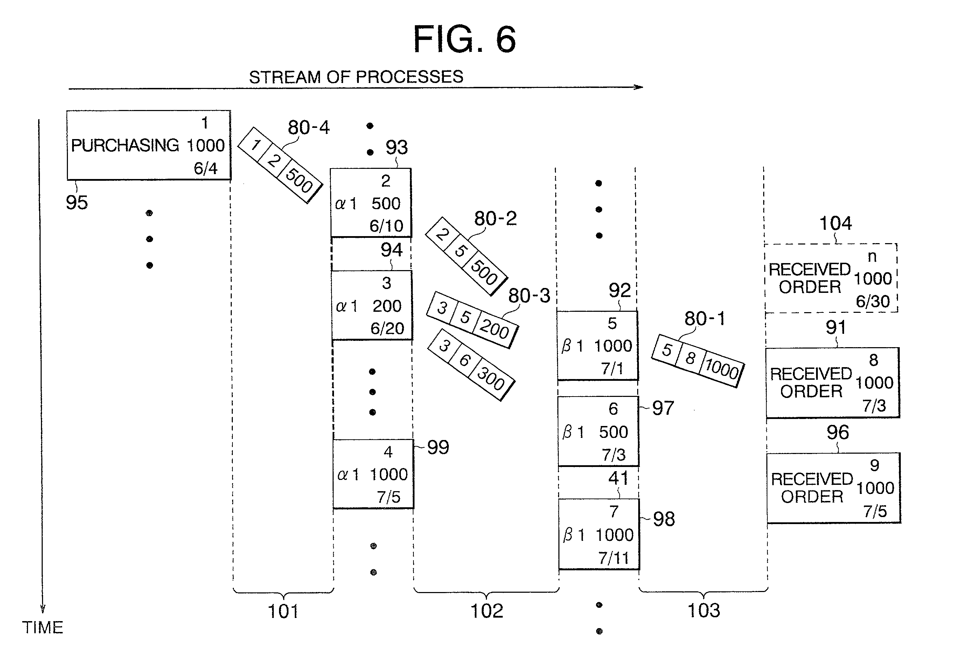

FIG. 6 shows specifically an image of allocation between lots in relation to the stream of processes and the elapse of time. In FIG. 6, as one example, allocation among the acceptance of an order, a production process for a completed product β1, a production process of a part α1, purchasing, subcontracting, etc. is shown. In FIG. 6, each rectangular block shows a lot. In the rectangular block for each lot, the lot ID number 1 to 9 is shown at the top right corner, the quantity is shown at the right middle, and the time limit (delivery date) is shown at the bottom right corner. In FIG. 6, the time axis is shown from the top to the bottom (elapse of time), while the stream of the process is shown from the left to the right for the production process.

The received order lot 91 of the lot ID number (8) is an order for delivery of 1000 pieces of the completed product β1 by July 3. As shown in FIG. 6, the received order lot 91 is linked by the correspondence data 80-1 to the production process lot 92. Similarly, the production process lot 92 is linked by the correspondence data 80-2, 80-3 with at least the production process lots 93, 94 of the downstream side. Further, similarly, the production process lot 93 is linked by the correspondence data 80-4 with the purchasing lot 95. According to the above linkages, the received order lot 91 is allocated to the production process lot 92 by the correspondence data 80-1 to 80-4, the production process lot 92 is allocated to the production process lots 93, 94, and the production process lot 93 is allocated to the purchasing lot 95. In these allocation relationships, linkage (allocation) is performed so as to maintain a normal temporal stream, that is, order of early and later delivery dates. Similar allocation is performed by correspondence data for the received order lot 96 later in time than the received order lot 91 and other production process lots 97, 98 and 99, etc. The correspondence between production processes, that is, the correspondence between process charts, is established by the parts 101, 102 and 103 of the set of correspondence data. The correspondence data is stored in the data storage section 74.

Note that the completed product β1 is normally produced by a combination with several other parts in addition to the above part α1. Therefore, the production process 92 is linked by correspondence data with lots relating to other parts not shown as well. Making the correspondence relationships (linkages) between the lot of the completed product β1 and the lot of the parts are automatically performed by considering the before and after relationship of the delivery date and referring to the part chart indicating the relationship between the completed product β1 and the plurality of parts.

The preparation of the above correspondence data, that is, the allocation processing, is automatically performed by automatically preparing the correspondence data 80 based on the above allocation program 76D, when setting a large number of lots as management objects at the phase of the planning process 21, assigning ID management data to each lot, and giving a lot relating to an actual or anticipated received order. As the conditions of the allocation processing, it is required that the step of setting a large number of lots as management objects and the step of assigning ID management data 60 to each of the large number of lots be executed.

In the above case, the principle of the earliest delivery dates first is applied in the preparation of the correspondence data 80. When linkage has been created for all lots based on the correspondence data 80, the data is stored in the data storage section 74.

Next, in the above state, it is assumed that, for example, a new received order lot 104 appears at the phase of the production process 22. This received order lot 104 has a lot ID number of "n", a quantity of "1000", and a delivery date of "June 30". When inputting the ID management data relating to the received order lot 104 to the management computer system 70 through the input section 72, the correspondence data is updated in the same way as above and allocation performed again based on the allocation program in the state including the received order lot 104.

When assignment for allocation processing cannot be performed in allocation performed at the above planning process 21 or reallocation in accordance with changes in received orders accompanying for example addition of the received order lot 104 in the later production process 22, an error message is output. At this time, the lot (ID management data 60) for which allocation was not possible and assignment was not possible is informed to the user. This processing guarantees the optimal state in the allocation processing by the allocation program 76D.

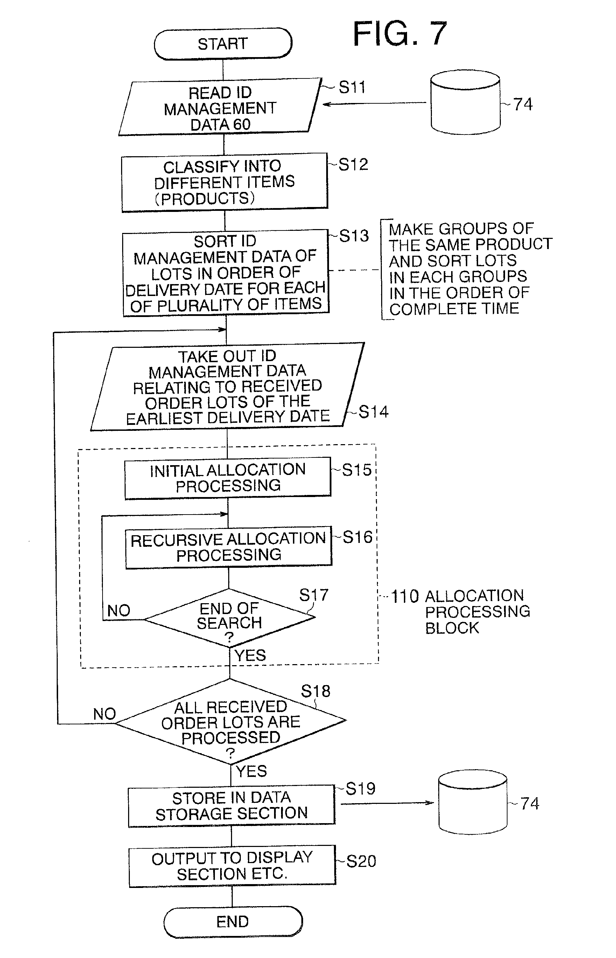

FIG. 7 shows a typical flow chart of the operation based on the above allocation program. Referring to FIG. 7, the allocation program 76D will be explained. In FIG. 7, the program reads the ID management data 60 relating to all lots of the management objects out from the data storage section 74 (step S11), then classifies by their related items or products (step S12). Next, the program sorts the ID management data of each classified groups in the order of time to be processed using the data of the delivery dates 64 for the ID management data 60 for each of the plurality of classified items (lots or products) (step S13). This is called an "item-wise time-order data group". Next, the ID management data relating to the received order lot is taken out in the order of the earliest delivery dates (step S14). Steps S15 and S16 are executed for the ID management data relating to the received order lot of the earliest delivery date taken out.

Step S15 searches from the above-mentioned "item-wise time-order data group" for the required item having the latest complete date or time (the most downstream in the stream of the process) based on the ID management data, the data relating to the part charts, and the data relating to the process charts for the ID management data relating to the taken out received order lots and assigns the necessary amounts (initial assignment processing). Due to this, the initial correspondence data 80 is prepared between the taken out received order lot and the production process lot, and the initial allocations are prepared. At step S16, next, the above step S15 is executed recursively for the allocated ID management data as well. That is, it searches from the above-mentioned "item-wise time-order data group" for the required item having the latest complete date and assigns the necessary amounts based on the ID management time, the data relating to the part charts, and the data relating to the process charts for the ID management data relating to the production process allocated to the received order lot. Thus, correspondence data 80 is prepared with the lots of the next upstream side production process etc. for the ID management data of the initially allocated production process lot. Step S16 is then repeated. Step S16 ends when reaching the management object positioned at the end of the stream such as the ID management data relating to the purchasing lot (as shown in judgment step S17), then the routine proceeds to the next judgment step S18. In other words, allocation continues until reaching the upstream most management object. An allocation processing block 110 is formed by the steps S15, S16 and S17. All the correspondence data on the correspondence relationships are in principle made for the received order lot of the earliest delivery date taken out first, whereupon the allocation is completed. At the judgment step S18, it is judged if the processing for the ID management data of all received order lots has ended. When the answer is YES at the judgment step S18, steps S19 and S20 are executed, then the routine ends, while when it is NO, the above step S14 is executed again. After step S14 is executed again, the ID management data for the received order lot with the next earliest delivery date is taken out and steps S15 to S17 are similarly repeated. In this way, the allocation is performed for all received order lots. At step S19, all of the correspondence data 80 prepared for all of the received order lots is again stored in the data storage section 74. Further, at step S20, the necessary correspondence data etc. is output to the display section 73 or another output section 75. Step S20 is not necessarily a required step, but is optional.

According to the above allocation program, first, when performing allocations for the received order lots, the ID management data relating to the plurality of lots covered by the allocations are classified by the item, and items in each classified groups are sorted in the order of the delivery date, so the search time required for allocations between lots, that is, the search time and computation time required for preparation of correspondence data relating to allocations between ID management data, can be shortened. Due to this, it is possible to perform allocation processing at a high speed and execute stream management practically.

Next, in the above allocation program, in the allocation phases or steps for the received order lots, it is possible to perform allocations in the order of the priority rather than the order of the delivery dates. In this case, it is necessary to add the management item of the priority to the ID management data relating to all received order lots. In the above step S14, the ID management data relating to the received order lot was taken out in the order of the earliest delivery dates, but in this case instead a step S21 for taking out the ID management data relating to the received order lot in the order of the highest priority is provided. The rest of the steps are the same as in the case of the allocation program shown in FIG. 7. When preparing correspondence management data 80 in the order of the highest priority, it is possible to give priority to the order with the highest priority.

Note that in the above allocation program, it is also possible to have the allocation performed in the order of the highest priority of the received order lots, then have the allocation performed in the order of the earliest delivery dates of the received order lots. According to such a configured allocation program, it would be possible to perform the allocation considering the priority first and the delivery date secondly. Conversely, in the allocation program, it is also possible to have the allocation performed in the order of the earliest delivery dates of the received order lots, then have the allocation performed in the order of the priority of the received order lots. According to such a configured allocation program, it would be possible to perform allocation considering the delivery date first and the priority secondly.

The above embodiment explains the example of re-doing the allocation in accordance with the changes in the actual received orders at the phase of the production process. However, it is also possible to similarly perform allocation processing in accordance with changes in the production process.

According to the present invention, in the management at every phases of the supply chain product management enabling the dynamic stream management, since the assignments for the allocation processing are made when handling a large amount of data, the ID management data relating to the management objects is classified into the different items and arranged in delivery order for each classified item, so it is possible to search through ID management data for the allocation in a short time and to practically execute the stream management so as to dynamically and quickly deal with any changes in the state of the received orders, processes, etc.

The present disclosure relates to subject matter contained in Japanese Patent Application No. 2002-43573, filed on February 20, 2002, the disclosure of which is expressly incorporated herein by reference in its entirety.

## Claims

1. A management method based on stream management in supply chain product management, of managing an entire process including a phase of making a production plan for a product based on a plurality of actual or anticipated received orders, a phase of producing said product through a plurality of lower production processes based on a predetermined routine, and a phase of delivering said produced product to a plurality of customers corresponding to said plurality of received orders, said management method including;
at the phase of making the production plan for said product,
a step of treating each of said plurality of received orders, each of a plurality of production objects in said plurality of lower production processes, each of a plurality of procedures with the outside relating to said lower production processes, and each of said plurality of deliveries, as a management object, and setting a lot for each of these management objects,
a step of assigning ID management data including a lot ID number, product name, quantity, and delivery date to each of said plurality of lots,
a step of making allocation between two lots with linkage among said plurality of lots by making correspondence data including a quantity to be supplied based on lot ID numbers relating to said two lots and said linkage using said plurality of ID management data relating to said plurality of lots, and
corresponding to the phase of producing said product,
a step of changing the relationship of said allocation based on said plurality of correspondence data relating to two lots in said plurality of lots corresponding to changes occurring in said received order.

2. A management method based on stream management in supply chain product management as set forth in claim 1, wherein lots relating to any m number of said received orders and lots relating to any n number of management objects other than received orders are allocated in an m:n correspondence.

3. A management method based on stream management in supply chain product management as set forth in claim 1, wherein lots relating to any m number of upstream side lower production processes and lots relating to any n number of downstream side lower production processes are allocated in an m:n correspondence.

4. A management method based on stream management in supply chain product management, of managing by a computer system a process comprised of a phase of drafting a production plan for a product based on a plurality of received orders, a phase of producing said product through a plurality of lower production processes based on a predetermined routine, and a phase of a plurality of procedures with the outside relating to said lower production processes, said management method including;
at a phase of input to said computer system,
a step of treating each of said plurality of received orders, each of a plurality of production objects in said plurality of lower production processes, and each of said plurality of procedures with the outside relating to said lower production processes as a management object and setting a lot for each of the plurality of management objects,
a step of assigning ID management data including a lot ID number, product name, quantity, and delivery date to each of said plurality of lots, and
a step of preparing part charts and process charts expressing the relationship of the necessary quantities among parts among said plurality of lower production processes,
at a phase of preparing, storing, and outputting data in said computer system,
a step of making allocation for two lots with linkage among said plurality of lots by making correspondence data including a quantity to be supplied based on the lot ID numbers relating to said two lots and said linkage, using said plurality of ID management data, said part charts, and said process charts relating to said plurality of lots, and
a step of changing the relationship of said allocation based on said plurality of correspondence data relating to two lots in said plurality of lots corresponding to a change occurring in at least a received order.

5. A management method based on stream management in supply chain product management as set forth in claim 4, wherein said step of changing the relationship of allocations comprises;
classifying said ID management data of a plurality of lots relating to said plurality of production objects and said ID management data of a plurality of lots relating to said plurality of procedures into different products to prepare a group of data for said plurality of lots, and
taking out said ID management data of a plurality of lots relating to said plurality of received orders in the order of the earlier delivery date, and, for said taken out ID management data, (1) searching from said group of data for a product required by that ID management data having the latest complete time and allocating the necessary quantities for it, (2) executing the step of said (1) recursively until reaching the upstream most management object even with respect to the allocated ID management data, and (3) repeating the steps of said (1) and (2) until said ID management data of all of said received orders has been taken out.

6. A management method based on stream management in supply chain product management as set forth in claim 4, wherein said step of changing the relationship of allocations comprises;
classifying said ID management data of a plurality of lots relating to said plurality of production objects and said ID management data of a plurality of lots relating to said plurality of procedures into different products to prepare a group of data for said plurality of lots, and
taking out said ID management data of a plurality of lots relating to said plurality of received orders in the order of the higher priority, and, for said taken out ID management data, (1) searching from said group of data for a product required by that ID management data having the latest complete time and allocating the necessary quantities for it, (2) executing the step of said (1) recursively until reaching the upstream most management object even with respect to the allocated ID management data, and (3) repeating the steps of said (1) and (2) until said ID management data of all of said received orders has been taken out.

7. A management method based on stream management in supply chain product management as set forth in claim 5 or 6, wherein said ID management data of the plurality of lots relating to said plurality of production objects and said ID management data of a plurality of lots relating to said plurality of procedures are arranged in the order of delivery dates.
